# EUROPEAN PATENT APPLICATION

(11) **EP 2 236 652 A2**
(43) Date of publication of application: **06.10.2010**
(21) Application number: 10154042.5
(22) Date of filing: 18.02.2010
(51) Int. Cl.: C25D 3/54, C25D 5/10, C25D 5/12, C25D 5/50, C23C 10/02, C23C 10/48, C23C 10/52, C23C 10/60

(54) **Methods of forming coatings on substrates**

(30) Priority: 26.03.2009 US 411632
(71) Applicant: Honeywell International Inc., Morristown, NJ 07962 (US)
(72) Inventor: Gualtieri, Devlin M., Morristown, NJ 07962-2245 (US); Raybould, Derek, Morristown, NJ 07962-2245 (US); Strangman, Tom, Morristown, NJ 07962-2245 (US); Reimer, George, Morristown, NJ 07962-2245 (US)
(74) Representative: Buckley, Guy Julian

(57) **Abstract**

Methods are provided for forming coatings on substrates. In an embodiment, a method includes forming (202) a first metal layer on the substrate, the first metal layer comprising a first precious metal, electrodepositing (204) an active element over the first metal layer to form an active element layer, the active element selected from the group consisting of yttrium, scandium, and a lanthanide series element, applying (206) a second metal layer over the active element layer, the second metal layer consisting essentially of a metal selected from a group consisting of a second precious metal, nickel, and cobalt, heating (208) the substrate including the first metal layer, the active element layer, and the second metal layer to form a diffusion-alloyed layer over the substrate, adding (210) aluminum to the diffusion-alloyed layer, and heating (212) the substrate to diffuse and react the aluminum with the diffusion-alloyed layer to form a modified precious metal aluminide coating (104) on the substrate (102).

## Description

### TECHNICAL FIELD

The inventive subject matter generally relates to substrates, and more particularly relates to coatings formed on substrates.

### BACKGROUND

Turbine engines are used as the primary power source for various kinds of aircraft. The engines may also serve as auxiliary power sources that drive air compressors, hydraulic pumps, and industrial electrical power generators. Most turbine engines generally follow the same basic power generation procedure. Compressed air is mixed with fuel and burned, and the expanding hot combustion gases are directed against stationary turbine vanes in the engine. The vanes turn the high velocity gas flow partially sideways to impinge onto turbine blades mounted on a rotatable turbine disk. The force of the impinging gas causes the turbine disk to spin at high speed. Jet propulsion engines use the power created by the rotating turbine disk to draw more air into the engine, and the high velocity combustion gas is passed out of the gas turbine aft end to create forward thrust. Other engines use this power to turn one or more propellers, electrical generators, or other devices.

Because fuel efficiency increases as engine operating temperatures increase, turbine engine blades and vanes are typically fabricated from high-temperature materials such as nickel-based superalloys. However, although nickel-based superalloys have good high-temperature properties and many other advantages, they may be susceptible to corrosion, oxidation, thermal fatigue, and/or foreign particle impact when exposed to harsh working environments during turbine engine operation. As a result, diverse coatings and coating methods have been developed to increase the operating temperature limits and service lives of the high pressure turbine components, including the turbine blade and vane airfoils.

One category of conventional airfoil coatings includes platinum aluminide coatings. Platinum aluminide coatings may serve as bond coats, which work in conjunction with thermal barrier coatings to protect the turbine component. However, oxygen may permeate the porous thermal barrier coating and may react with aluminum from the platinum aluminide coating to form an interfacial, protective aluminum oxide (alumina) scale over the platinum aluminide coating. Adhesion of the thermal barrier coating to the component is dependent upon the adhesion of the interfacial alumina scale to the platinum aluminide coating. In some cases, in order to enhance alumina scale adhesion, the platinum aluminide coating may be modified with the addition of oxygen active elements such as silicon, hafnium, and yttrium.

Although the aforementioned formulations are sufficient for enhancing adhesion of the alumina to the platinum aluminide coating, processes by which the formulations coatings are formed may be improved. For example, because the oxygen active elements such as yttrium readily react with air at room temperature, conventional processes such as electron beam - physical vapor deposition (EB-PVD) and plasma spraying are typically used to deposit prealloyed materials containing yttrium as an alloying element to form the coating. However, the prealloyed materials are costly and the associated deposition processes for prealloyed materials are relatively expensive to perform. Moreover, if a thin layer of unalloyed yttrium were to be deposited on the turbine component in elemental form, the unalloyed yttrium would be susceptible to rapid oxidation and would form yttrium oxide. Inclusion of a layer of yttrium oxide into the platinum aluminide coating could disrupt the coating's ability to form an adherent protective alumina scale.

Accordingly, it is desirable to have an active element modified platinum aluminide coating that is improved over conventional platinum aluminide coatings. Alternatively, it is desirable to have active element modified nickel aluminide and cobalt aluminide coatings that perform comparably to higher cost conventional platinum aluminide coatings. More particularly, it is desirable to have a platinum aluminide coating that may be more corrosion-resistant and/or oxidation-resistant than conventional platinum aluminide coating. In addition, it is desirable to provide methods of forming nickel aluminide, cobalt aluminide, and platinum aluminide coatings that are less time-consuming, less expensive, and relatively simple to perform as compared to conventional formation methods. Furthermore, other desirable features and characteristics of the inventive subject matter will become apparent from the subsequent detailed description of the inventive subject matter and the appended claims, taken in conjunction with the accompanying drawings and this background of the inventive subject matter.

### BRIEF SUMMARY

Methods of forming coatings are provided.

In an embodiment, and by way of example only, a method includes forming a first metal layer on the substrate, the first metal layer comprising a first precious metal, electrodepositing an active element over the first metal layer to form an active element layer, the active element selected from the group consisting of yttrium, scandium, and a lanthanide series element, applying a second metal layer over the active element layer, the second metal layer consisting essentially of a metal selected from a group consisting of a second precious metal, nickel, and cobalt, heating the substrate including the first metal layer, the active element layer, and the second metal layer to form a diffusion-alloyed layer over the substrate, adding aluminum to the diffusion-alloyed layer, and heating the substrate to diffuse and react the aluminum with the diffusion-alloyed layer to form a modified precious metal aluminide coating on the substrate.

In another embodiment, by way of example only, a method includes forming a platinum layer on the substrate, electrodepositing yttrium over the platinum layer to form an yttrium layer, applying a nickel layer over the yttrium layer, heating the substrate to form a diffusion-alloyed layer over the substrate, the diffusion-alloyed layer comprising platinum, yttrium, and nickel, adding aluminum to the diffusion-alloyed layer, and heating the substrate to diffuse and react the aluminum with the diffusion-alloyed layer to form a platinum-yttrium-nickel-aluminide coating on the substrate.

In another embodiment, by way of example only, a method includes forming a nickel layer on the substrate, electrodepositing yttrium over the nickel layer to form an yttrium layer, applying a nickel layer over the yttrium layer, heating the substrate to form a diffusion-alloyed layer over the substrate, the diffusion-alloyed layer comprising yttrium and nickel, adding aluminum to the diffusion-alloyed layer, and heating the substrate to diffuse and react the aluminum with the diffusion-alloyed layer to form a nickel-yttrium-aluminide coating on the substrate.

### BRIEF DESCRIPTION OF THE DRAWINGS

The inventive subject matter will hereinafter be described in conjunction with the following drawing figures, wherein like numerals denote like elements, and

FIG. 1 is a cross section of a portion of a component, according to an embodiment; and

FIG. 2 is a flow diagram of a method for forming a coating on a component, according to an embodiment.

### DETAILED DESCRIPTION

The following detailed description is merely exemplary in nature and is not intended to limit the inventive subject matter or the application and uses of the inventive subject matter. Furthermore, there is no intention to be bound by any theory presented in the preceding background or the following detailed description.

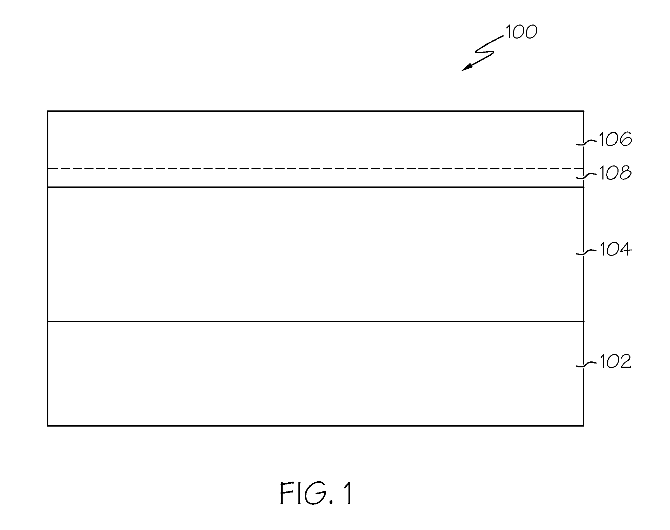

FIG. 1 is a cross section of a portion of a component 100, according to an embodiment. The component 100 is configured to be oxidation and hot corrosion resistant when used in high temperature applications (e.g., a component operating in an oxidizing environment and having metal temperatures up to about 1150°C). For example, the component 100 may be a turbine engine component, such as a turbine blade, stator, and the like. The component 100 includes a substrate 102, a first coating 104, and a second coating 106, in an embodiment. The substrate 102 may comprise a metal, a metallic alloy or a metallic superalloy, such as a nickel-base, cobalt-base, or iron-base alloy or superalloy. In other embodiments, the substrate 102 may comprise other materials.

The first coating 104 may serve as a bond coat and is adapted to cooperate with the second coating 106 to protect the substrate 102, and hence, the component 100, from high gas temperatures and/or oxidation, in an embodiment. In an embodiment, the first coating 104 may have a thickness in a range of from about 25 µm to about 300 µm. In another embodiment, the first coating 104 may have a thickness in the range of 25 to 75 µm. In another embodiment, the thickness of the first coating 104 may be greater or less than the aforementioned range. According to an embodiment, the first coating 104 may comprise a precious metal, nickel or cobalt, an active element, a protective metal, and aluminum. In an embodiment, the term "precious metal" may be defined herein as an element selected from the group containing rhodium, palladium, iridium and platinum. In accordance with an embodiment, the precious metal comprises platinum. In a lower-cost embodiment, the precious metal may be replaced with nickel or cobalt. The term "active element" may be defined as an element that improves oxidation resistance of the alloy of the first coating 104 by enhancing oxide scale adhesion and acting as a sulfur getter (e.g., an element having an affinity to sulfur). In an example, the active element may be deposited in its metallic form and then alloyed with other constituents of the coating by heat treatment. According to an embodiment, the active element may comprise yttrium. In another embodiment, the active element may comprise scandium. In still another embodiment, the active element may comprise a lanthanide series element, such as an element having an atomic number between 57 and 71. The term "protective metal" as used herein may refer to a metal that may be selected to protect the active element from oxidation prior to the vacuum or inert gas heat treatment that alloys the active element with the precious metal and protective metal layers during formation of the first coating 104. In an embodiment in which the active element comprises yttrium, the protective element may comprise an element such as nickel or cobalt. Alternatively, the precious metal may serve as the protective element. In another embodiment, another precious metal may be included in the alloy of the first coating 104 and may serve as the protective element.

In accordance with an embodiment, the first coating 104 may comprise a modified platinum aluminide coating. The first coating 104 may have a composition including platinum, yttrium, nickel, and aluminum, in an embodiment. In another embodiment, the first coating 104 may comprise a composition including platinum, yttrium, cobalt, and aluminum. In still another embodiment, the first coating 104 may comprise a composition including platinum, yttrium, palladium, and aluminum. In a lower-cost embodiment, the first coating may comprise nickel, cobalt, yttrium, and aluminum but contain no precious metal. In still other embodiments, the first coating 104 may comprise any other combination of elements provided above in the description relating to the first coating 104.

According to an embodiment, when the first coating 104 comprises Pt, Y, and Ni and has been diffusion heat treated and aluminized, the Pt, Ni, Y, and Al constituents of the coating may be partitioned into gamma Ni, gamma prime Ni₃Al, and beta NiAl phases, which are solid solutions. Yttrium may also be present as a nickel-yttride intermetallic phase. According to another embodiment, when the first coating 104 comprises Pt, Y, and Co and has been diffusion heat treated and aluminized, the Pt, Co, Y, and Al constituents of the coatings may be partitioned into gamma Co and beta CoAl phases, which are solid solutions. Yttrium may also be present as a cobalt-yttride intermetallic phase. In any case, the preferred amount of yttrium in coating 104 is in the range of about 0.01% to about 0.6% by weight, in an embodiment. However, in other embodiments, the amount of yttrium may be greater or less than the aforementioned range.

No matter the particular elements present in the first coating 104, the first coating 104 is formed such that some of the constituents of the alloy may not be substantially evenly distributed throughout the first coating 104. For example, the presence of the alloy constituents in the first coating 104 may be graded. In another example, in order to improve oxidation resistance of the first coating 104, the active element may be diffused such that a higher concentration of active element is found in a first area of the first coating 104 that is adjacent to the substrate 102 than in a second area of the first coating 104 that is adjacent to the second coating 106. In still another embodiment, aluminum may be diffused such that a higher concentration thereof is found in the second area of the first coating 104 than in the first area of the first coating 104.

An optional second coating 106 is formed over the first coating 104 and is formulated to provide the component 100 with improved thermal resistance. According to an embodiment, the second coating 106 may serve as a thermal barrier coating. In this regard, the second coating 106 may comprise a ceramic, such as stabilized tetragonal and cubic zirconia and stabilized tetragonal and cubic hafnia, and mixtures thereof. In another embodiment, the second coating 106 may comprise about 7 weight % yttria-stabilized tetragonal zirconia. In still other embodiments, other suitable materials for use as thermal barrier coatings may alternatively be employed. In an embodiment, the second coating 106 may have a thickness in a range of from about 50 µm to about 250 µm. In another embodiment, the thickness of the second coating 106 may be greater or less than the aforementioned range.

During deposition of the second coating 106 (e.g., thermal barrier coating) and during subsequent service, an alumina layer 108 may thermally grow at the interface between coatings 104 and 106. According to an embodiment, the alumina layer 108 may have an initial thickness in a range of from about 0.1 µm to about 2.0 µm. In another embodiment, the thickness of the alumina layer 108 may be greater or less than the aforementioned range.

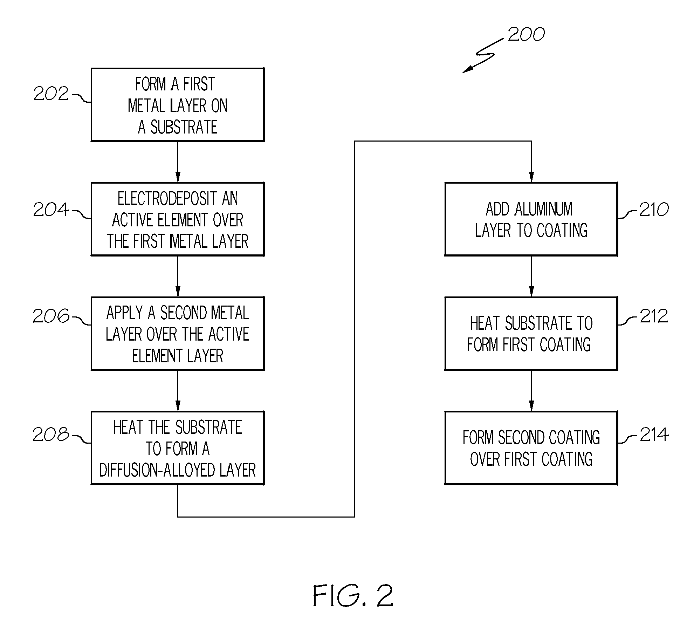

FIG. 2 is a flow diagram of a method 200 for forming coatings on a component, such as coatings 104, 106 on component 100, according to an embodiment. In an embodiment, the method 200 includes forming a first metal layer on a substrate, step 202. The first metal layer may comprise nickel, cobalt, or a first precious metal, which may be selected from the constituents noted above as described in relation to the first coating 104 (FIG. 1). In any case, the first metal layer may be electroplated over the substrate, in an embodiment. In another embodiment other deposition methods, including chemical and/or physical vapor deposition, may alternatively be employed. The first metal layer may be deposited to a thickness in a range of from about 3 µm to about 15 µm, in an embodiment. In another embodiment, the thickness of the first metal layer may be greater or less than the aforementioned range. In another embodiment, if the substrate may be directly electroplated with an active element, the first metal layer is optional.

Next, an active element is electrodeposited over the first metal layer to form an active element layer, step 204. In an embodiment, the active element includes yttrium. In another embodiment, the active element may comprise scandium. In still another embodiment, the active element may comprise a lanthanide series element, such as an element having an atomic number between 57 and 71. However, in other embodiments, other active elements, such as those described above in conjunction with the first coating 104, alternatively may be employed. To form the active element layer, a first electrolytic bath may be prepared. In an embodiment, the first electrolytic bath includes a solvent and an electrolyte solute. In accordance with an embodiment, the first electrolytic bath may be substantially or entirely non-aqueous and may include a solvent that consists of a mixture of a primary and a tertiary alcohol. Primary alcohols that may be included in the first electrolyte bath include methanol and ethanol, in an embodiment. According to another embodiment, pure ethanol as a primary alcohol, may be included. In still another embodiment, denatured ethanol that includes some methanol (e.g. about 5% methanol) may be employed as the primary alcohol. In another embodiment, a suitable tertiary alcohol for inclusion in the solvent may comprise alpha terpineol. In an example, the tertiary alcohol may be included at a concentration in a range of from about 20 and about 80 percent of a total volume of the solvent, with a substantial remainder of the total solvent weight being the primary alcohol. An electrolyte solvent may include a tertiary alcohol and a primary alcohol at about a 1:1 volume ratio.

The first electrolyte solute in the bath includes a salt of the active element to be electro-deposited onto the substrate. Metal nitrates are one class of electrolyte solutes, and are particularly effective when yttrium is the active metal to be electro-deposited. In an embodiment, the electrolyte solute includes Y(NO₃)·3H₂O, which is a dehydration product obtainable by roasting Y(NO₃)·6H₂O at a suitable temperature (e.g. 100 °C) to remove three waters of hydration. The electrolyte solute may be included in the bath solution at least at a 10 milliMolar (mM) concentration, and preferably at least at a 100 mM concentration, and more preferably at least at a 200 mM concentration.

A buffer may also be included in the first electrolyte bath as necessary. In an embodiment, the buffer may include sodium acetate. Because sodium acetate is commonly obtained in a hydrated form, typically with three waters of hydration per molecule of sodium acetate, it may be dehydrated by heating above 123 °C to form anhydrous sodium acetate before being added to the electrolytic bath. Sodium acetate may be included in the bath at a 5 to 20 mM concentration, and is preferably included at about a 10 mM concentration.

At some point prior to deposition, the first metal layer or other surfaces of the component may be cleaned using a cleaning solvent such as methanol, in an embodiment. In another embodiment, the component additionally or alternatively may be prepared by masking areas on which a coating is undesirable using a masking material that is compatible with the electrolytic bath.

In order to prevent oxidation of the component surface, or oxidation of the active element being electrodeposited onto the surface, the bath is placed in a controlled and substantially oxygen-free environment during the electrodeposition process. For example, an inert gas may be blown over the bath, or the bath may be placed into a chamber of the inert gas. Suitable inert gases include dry nitrogen and argon. According to an embodiment, electrodeposition may be performed at an ambient temperature ranging from about 0 °C to about 50 °C, or from about 20 to about 25 °C.

Electrical parameters for electrodeposition of the active element onto the component substrate may be adjusted depending on factors such as the desired coating thickness and the substrate composition. According to an embodiment, platinum plates may be used and a current of about 2.5 milliamperes (mA) per square inch of component surface area to be coated is applied to the plates. The current may be maintained for between about an hour to five hours, in an embodiment. In other embodiments, the current may be maintained for a longer or shorter duration. For example, in embodiments in which a thinner layer may be desired, the current may be maintained for about 1.5 hours. In embodiments in which a thicker layer may be desired, the current may be maintained for about 3 hours. To form a modified platinum aluminide coating having a thickness of about 50 µm, the active element is electrodeposited to a thickness ranging between about 0.4 and about 1.0 µm to obtain a finalized coating having between about 0.2 and about 0.6 weight percent yttrium.

After electrodepositing the active element, a second metal layer is applied over the active element layer, step 206. The second metal layer is formulated to protect the active element from oxidation before subsequent heat treatment occurs. By protecting the active element, the active element may diffusion-alloy with the first and second metal layers, and in some cases, with the adjacent substrate. The second metal layer may consist essentially of one or more metals selected from those described above in conjunction with protective elements. In general, the protective element may be selected from a group consisting of a second precious metal, nickel, and cobalt. The second precious metal may be substantially identical to the precious metal deposited for the first metal layer, in an embodiment. In another embodiment, the second precious metal may be different from the precious metal comprising the first metal layer.

In any case, the second metal layer may be formed using electrodeposition. In accordance with an embodiment in which the second metal layer comprises nickel and electrodeposition is employed, the second metal layer may be deposited via a second electrolytic bath including a solvent and an electrolyte solute. In accordance with an embodiment, the solvent includes distilled water. In another embodiment, the solvent includes a solute component and a buffer component. For example, the solvent may comprise a solute component of nickel chloride (NiCl₂) and a buffer component of boric acid (H₃BO₃). According to an embodiment, the nickel chloride may be present in a molarity of about one, and the boric acid is present in a molarity of about 0.5. In another embodiment, the solvent comprise solute components of nickel fluoroborate (Ni(BF₄)₂ and nickel chloride (NiCl₂), and a buffer component is boric acid (H₃BO₃). The nickel fluoroborate may be present in a molarity of about three-quarters, the nickel chloride is present in a molarity of about 0.02, and the boric acid is present in a molarity of about a third, in an embodiment. Depending on the particular material for use in the second metal layer, salts, such as nickel fluoride, nickel chloride, cobalt nitrate, cobalt sulfate, or cobalt metanesulfonate may be employed. Generally, sulfur-containing solutes should be avoided in preparation of coatings for high temperature corrosion resistance.

At some point prior to deposition, the second metal layer or other surfaces of the component may be cleaned using a cleaning solvent such as methanol or denatured ethanol, in an embodiment. In another embodiment, the component additionally or alternatively may be prepared by masking areas on which a coating is undesirable using a masking material that will not substantially degrade in the second electrolytic bath.

The second electrolytic bath may be placed in a controlled and substantially oxygen-free environment during the electrodeposition process. For example, an inert gas may be blown over the bath, or the bath may be placed into a chamber of the inert gas. Suitable inert gases include dry nitrogen and argon. According to an embodiment, electrodeposition may be performed at an ambient temperature ranging from about 0 °C to about 50 °C, or from about 20 °C to about 25 °C.

Electrical parameters for electrodeposition of the second layer material onto the active element layer may be adjusted depending on factors such as the desired coating thickness and the substrate composition. According to an embodiment, nickel anode plates may be placed in the second electrolytic bath. To further prevent oxidation of the active element layer before immersion into the second electrolytic bath, an electric potential may be applied between substrate and the plates. In any case, after the plates and substrate are placed in the bath, a current of about 2.5 milliamperes (mA) per square inch of component surface area to be coated may be applied to the plates. The current may be maintained for between about an hour to five hours, in an embodiment. In other embodiments, the current may be maintained for a longer or shorter duration. For example, in embodiments in which a thinner layer may be desired, the current may be maintained for about 1.5 hours. In embodiments in which a thicker layer may be desired, the current may be maintained for about 3 hours. The second metal layer may be electrodeposited to a thickness ranging between about 1.0 and about 20.0 µm. In other embodiments, the second metal layer may have a greater thickness.

Next, the substrate including the first metal layer, the active element layer, and the second metal layer are heated to form a diffusion-alloyed layer over the substrate, step 208. In an embodiment, a suitable temperature is selected to thermally diffuse the active element into the first and second metal layers to form a modified metal layer. Additionally, thermal diffusion may be performed under vacuum in order to remove oxygen from the environment. For coatings applied to superalloy substrates, diffusion of the coating may be in the temperature range of 1000 °C to 1150 °C. According to one embodiment, thermal diffusion-alloying of yttrium, platinum, and nickel is performed in a vacuum by maintaining a temperature of about 1037 °C for a duration in a range of from about one hour to about three hours.

After the diffusion-alloying of the platinum, yttrium and nickel layers has been completed, aluminum may be added to the coating, step 210. The aluminum may be added using one of numerous methods. For example, aluminum may be added by a chemical vapor deposition process that both deposits aluminum and reacts it with the other elements in the coating to form aluminum-rich intermetallic phases. Alternatively, elemental aluminum may be deposited onto the surface of the coating by various deposition methods, including low temperature chemical vapor deposition and physical vapor deposition. The substrate is heated to form the first coating, step 212. In an embodiment, heat treatment is performed and the elemental aluminum reacts and alloys the aluminum with the other constituents of the coating. The diffusion heat treatment may be performed in the range of 900 °C to 1100C. According to one exemplary method, thermal diffusion of aluminum into the modified platinum layer is performed in a vacuum by maintaining a temperature of about 1060 °C for a duration in a range of from about one hour to about five hours, preferably four hours.

A second coating may be formed over the first coating, step 214. In accordance with an embodiment, the second coating may be a thermal barrier coating. To improve adhesion of the second coating to the first coating, a metastable alumina layer may be formed over the first coating. In an embodiment, a thin layer (for example, having a thickness in the range of from about 0.1 to about 5 µm, and typically of less than 1 µm) of metastable alumina may be applied by various deposition processes known in the art. As non-limiting examples, metastable alumina layer may be applied by a sol gel process, by a physical vapor deposition process, or by a chemical vapor deposition (CVD) process, such as atomic layer deposition.

Following application of metastable alumina layer, if employed, the second coating may be applied. In accordance with an embodiment, the second coating may comprise a material suitable for the thermal barrier coating, such as a ceramic that can adhere to alumina. In an embodiment, the ceramic may be stabilized tetragonal or cubic phase zirconia or hafnia. In another embodiment, the ceramic may be yttria-stabilized zirconia (YSZ). The second coating may be applied by a deposition process, such as by electron beam evaporation-physical vapor deposition (EB-PVD), plasma spraying, cold-spraying, chemical vapor deposition or another suitable deposition or application process. According to an embodiment, the substrate is then heated to a temperature from about 1000° C to about 1150° C. Heat treatment may be carried out in an inert atmosphere, such as argon, or in a vacuum and may be continued until the metastable alumina layer, if employed, is fully transformed to comprise crystallographically stable alpha alumina that contains a dispersion of particles solubilized from the second coating. For example, in a case where YSZ is used, the transformation of metastable alumina layer to stable phases may comprise a mixture of alpha alumina, yttrium aluminum garnet (YAG), and zirconia. The presence of the mixed alpha alumina and zirconia may improve cohesion between the interfacial alumina layer and the second coating.

The following example demonstrates various embodiments of the coatings and methods of forming coatings on substrates. These examples should not be construed as in any way limiting the scope of the inventive subject matter.

EXAMPLE

Y(NO₃)₃·3H₂O was prepared by roasting Y(NO₃)₃·6H₂O above 100 °C. Anhydrous sodium acetate was prepared by roasting CH₃COONa·3H₂O above 123 °C to form CH₃COONa. An electrolytic bath was prepared by adding 41.238 grams of Y(NO₃)3·3H₂O and 0.6152 grams of NaC₂H₃O₂ to a mixture of 375 mL denatured ethanol (95% ethanol, 5% methanol) and 375 mL of alpha-terpineol. This electrolytic bath was maintained at a temperature of 50 °C in a closed vessel for four hours to ensure solution of the solid constituents. The electrolytic bath was then cooled to room temperature.

A button of superalloy SC-180, 2.54 centimeters (cm) (1 inch) in diameter and 0.32 cm (one-eighth inch) thickness was attached by welding to an electrically conducting wire and electroplated with a thin (about 5 microns) layer of platinum. After removal from the platinum electroplating bath, the button was rinsed and dried. The button was subsequently placed in the center of the region between two parallel platinum plates, 5.08 cm x 11.43 cm (2 inch by 4.5 inch) rectangular dimension, separated by a 3.81 cm (1.5 inch) spacing. The approximate surface area of the button is 12.67 square centimeters (1.96 square inches). This assembly and the electroplating solution were placed in an atmosphere-controlled chamber of dry nitrogen gas. The assembly was then placed into the yttrium plating solution, a current source was connected such that the negative lead was attached to the button, and the positive lead was attached to both platinum plates.

A current of 25 milliamperes was allowed to flow between the two platinum plates and the button for a period of 30 minutes. A gentle stirring was applied to the solution during electroplating by a one-inch square Teflon stirrer rotated in-plane at about 100 revolutions per minute. A voltage of about four volts was required to maintain the current flow in the electroplating cell. A total charge transfer of 4.5 Coulombs was obtained from a flow of 2.5 milliamperes for 30 minutes, corresponding to a plated yttrium layer of about 0.25 micrometer (µm) thickness on the surface of the button, assuming perfect efficiency in the plating process.

After electroplating, the excess solution was washed from the button in a denatured ethanol bath, and the button was allowed to dry in the controlled oxygen-free atmosphere. Previously placed in the controlled atmosphere chamber was a nickel electroplating solution prepared by dissolving 187.5 grams of nickel chloride and 22.5 grams of boric acid in 750 mL of water. The yttrium plated button was placed in an electroplating vessel of the same geometry as the one for yttrium plating, except that nickel electrodes were used in place of platinum. To prevent reaction of the yttrium with the water solution, a potential was applied between the button and the nickel electrode before immersion into the nickel plating bath. The polarity of the button was negative with respect to the nickel electrodes. Application of a current of 125 mA for 22.5 minutes resulted in a nickel coating of about 2.5 micrometers over the existing yttrium coating. X-ray fluorescence analysis of a similar button viewed in cross-section in a scanning electron microscope showed the expected presence of the elemental metals in the expected thicknesses.

After exposure to atmosphere, the superalloy button with layers of platinum, yttrium and nickel deposited in succession, was placed into a vacuum furnace and heated at 1037 °C (1900 °F) for three hours to allow diffusion-alloying of the superalloy surface with the platinum, yttrium and nickel layers. The furnace was then allowed to cool to room temperature over the course of several hours, and the button was removed from the furnace. The button was then placed in another vacuum chamber, and an additional layer of aluminum was deposited onto the button by evaporation and condensation of aluminum onto the surface of the button. The button was then heat treated in another vacuum furnace for diffusion and reaction of the aluminum to create a superalloy button with a platinum-yttrium-nickel-aluminide coating that comprised aluminum rich intermetallic phases. This coated button was inspected and showed improved lifetime in an accelerated cyclic-oxidation test at 1149° C (2100 °F) over buttons with a platinum-aluminide coating without the yttrium and nickel additions.

Active element modified platinum aluminide coatings have been provided that are improved over conventional platinum aluminide coatings. More particularly, because the platinum aluminide coatings include both yttrium and nickel and are formed according to the methods described above, they may be more corrosion-resistant and/or oxidation-resistant than conventional platinum aluminide coatings. Improved oxide scale adhesion on these active element modified Pt-aluminide coatings also enable thermal barrier coatings with improved spalling lives. The above-described methods of forming the modified platinum aluminide coatings may be less time-consuming, less expensive, and relatively simpler to perform as compared to conventional formation methods.

While at least one exemplary embodiment has been presented in the foregoing detailed description of the inventive subject matter, it should be appreciated that a vast number of variations exist. It should also be appreciated that the exemplary embodiment or exemplary embodiments are only examples, and are not intended to limit the scope, applicability, or configuration of the inventive subject matter in any way. Rather, the foregoing detailed description will provide those skilled in the art with a convenient road map for implementing an exemplary embodiment of the inventive subject matter. It being understood that various changes may be made in the function and arrangement of elements described in an exemplary embodiment without departing from the scope of the inventive subject matter as set forth in the appended claims.

## Claims

1. A method of forming a coating on a substrate, the method comprising the steps of:
forming (202) a first metal layer on the substrate, the first metal layer comprising a first precious metal;
electrodepositing (204) an active element over the first metal layer to form an active element layer, the active element selected from the group consisting of yttrium, scandium, and a lanthanide series element;
applying (206) a second metal layer over the active element layer, the second metal layer consisting essentially of a metal selected from a group consisting of a second precious metal, nickel, and cobalt;
heating (208) the substrate including the first metal layer, the active element layer, and the second metal layer to form a diffusion-alloyed layer over the substrate;
adding (210) aluminum to the diffusion-alloyed layer; and
heating (212) the substrate to diffuse the aluminum into the diffusion-alloyed layer to form a modified precious metal aluminide coating (104) on the substrate (102).

2. The method of claim 1, wherein the step of forming (202) the first metal layer comprises depositing platinum onto the substrate (102).

3. The method of claim 1, wherein the step of forming (202) a first metal layer comprises electroplating the first metal layer onto the substrate (102).

4. The method of claim 1, wherein the step of electrodepositing (204) comprises:
providing a bath comprising a primary alcohol and a tertiary alcohol, and an electrolyte comprising an yttrium salt; and
electrodepositing yttrium from the yttrium salt onto the first metal layer.

5. The method of claim 4, wherein the electrolyte comprises yttrium nitrate.

6. The method of claim 5, wherein the electrolyte comprises Y(NO₃)·3H₂O.

7. The method of claim 1, wherein the step of applying (206) a second metal layer comprises applying cobalt to form the second metal layer.

8. The method of claim 1, wherein the step of applying (206) a second metal layer comprises applying platinum to form the second metal layer.

9. The method of claim 1, wherein the step of applying (206) a second metal layer comprises electrodepositing nickel onto the active element layer to form the second metal layer.

10. The method of claim 10, wherein the step of electrodepositing (204) nickel comprises placing the substrate in an electrolytic bath including nickel chloride and boric acid.
